(19) Europäisches Patentamt
European Patent Office
Office européen des brevets

(11) EP 4 723 219 A1

(12) **EUROPEAN PATENT APPLICATION**
published in accordance with Art. 153(4) EPC

(43) Date of publication:
**08.04.2026 Bulletin 2026/15**

(21) Application number: 25785380.4

(22) Date of filing: **06.01.2025**

(51) International Patent Classification (IPC):
*H01M 4/38* (2006.01)    *H01M 4/36* (2006.01)
*H01M 4/62* (2006.01)    *H01M 4/04* (2006.01)

(86) International application number:
**PCT/CN2025/070813**

(87) International publication number:
**WO 2025/213898 (16.10.2025 Gazette 2025/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2024 CN 202410424313**

(71) Applicant: **BTR New Material Group Co., Ltd.
Shenzhen, Guangdong 518106 (CN)**

(72) Inventors:
• **XIAO, Chengmao
Shenzhen, Guangdong 518106 (CN)**
• **HE, Peng
Shenzhen, Guangdong 518106 (CN)**
• **REN, Jianguo
Shenzhen, Guangdong 518106 (CN)**

(74) Representative: **Michalski Hüttermann & Partner
Patentanwälte mbB
Kaistraße 16A
40221 Düsseldorf (DE)**

(54) **NEGATIVE ELECTRODE MATERIAL AND BATTERY**

(57) The present application relates to the technical field of batteries, and particularly relates to an anode material and a battery. The anode material includes an active material including a silicon material and a carbon matrix with pores, where at least part of the silicon material is located into the pores of the carbon matrix. The anode material has a true density of $\rho$ g/cm$^3$ and a total pore volume of V cm$^3$/g, and satisfies: M=pV/(p+V), and $0.020 \leq M \leq 0.085$. With strong structural stability and low volume expansion rate, the anode material of the present application has the characteristics of high capacity, high initial coulombic efficiency, excellent cycle performance and the like.

FIG.2

**Description**

**CROSS-REFERENCE TO RELATED APPLICATION**

This application claims priority from Chinese patent application No. 202410424313.3 titled "ANODE MATERIAL, PREPARATION METHOD THEREOF AND BATTERY" filed on April 10, 2024.

**TECHNICAL FIELD**

The present disclosure relates to the technical field of batteries, and particularly relates to an anode material and a battery.

**BACKGROUND OF THE INVENTION**

In recent years, with the development of the market, lithium-ion batteries are widely used in not only mobile devices such as smart phones and portable computers, but also the fields of electric automobiles, electric tools, and the like. Therefore, it is a current trend to develop lithium-ion batteries with higher energy density. Cathode and anode materials are the core of the battery, and determine the working efficiency of the battery. The most common currently commercialized anode material is graphite, the capacity of which has nearly reached its theoretical upper limit, and further improvement is limited. Therefore, there is an urgent need to develop a new generation of anode material with high energy density.

Generally considered as a next-generation battery anode material, the silicon-based anode material has the advantages of relative high capacity, rich sources, safety and the like. However, the silicon-based anode material has a severe volume expansion effect during cycling, which may cause pulverization and breaking, and therefore rapid cycle degradation of the anode material. In the existing art, carbon coating is typically performed on the silicon-based anode material to alleviate the volume expansion effect of the silicon-based anode material in cycling. The silicon-based anode material thus prepared has a relieved volume expansion effect to a certain extent, but still has the defects of unstable cycle, poor rate capability and the like, and needs further improvement and optimization.

**SUMMARY OF THE INVENTION**

The present application provides an anode material and a battery, which can help to improve the cycle performance of the silicon-based anode material while taking the capacity of the silicon-based anode material into consideration.

In a first aspect, an example of the present application provides an anode material, including an active material including a silicon material and a carbon matrix with pores, where at least part of the silicon material is located into the pores of the carbon matrix. The anode material has a true density of $\rho$ g/cm$^3$ and a total pore volume of V cm$^3$/g, and satisfies: M=$\rho$V/($\rho$+V), and 0.020≤M≤0.085. The silicon material may be, for example, silicon particles.

In a second aspect, the present application further provides a battery, including the anode material as described above.

Compared with the existing art, the technical solutions of the present application have at least the following technical effects: the anode material of the present application satisfies: 0.020≤M=$\rho$V/($\rho$+V)≤0.085, and with strong structural stability and low volume expansion rate, the anode material has the characteristics of high capacity, high initial coulombic efficiency (ICE), excellent cycle performance and the like. In the anode material, the total pore volume V cm$^3$/g refers to the unfilled space in the carbon matrix material. A larger V value indicates larger space reserved in the anode material, resulting in a more obvious buffering effect on silicon expansion, which can help to reduce the volume expansion rate of the anode material. However, an excessively large V value may lead to a decreased capacity of the anode material on one hand, and degraded pressure-resistant properties of the anode material and a decreased lithium-ion transport efficiency on the other hand. The true density $\rho$ g/cm$^3$ is a density obtained by dividing a mass of anode material particles by a volume excluding pores inside and outside the particles, which is a standard value independent of the total pore volume V cm$^3$/g. In the silicon-carbon composite anode material of the present application, since the density of silicon is different from that of carbon, a magnitude of the $\rho$ value reflects a filling degree of an interior of the carbon matrix with the silicon material. The more the pores in the carbon matrix are filled with the silicon material, the larger the true density $\rho$ value of the anode material will be, and the more the capacity and pressure-resistant properties of the anode material will be improved. However, the silicon material may be over-matched, or even interference-fitted, with walls of the pores in the carbon matrix where the silicon material is distributed, which is not beneficial to providing a buffer space for the expansion of the silicon material, and may cause an increased volume expansion rate and thereby reduced cycle performance of the anode material. Considering the dual effects of the true density and the total pore volume of the anode material, the present

application incorporates both ρ and V into a calculation equation for a comprehensive performance measurement parameter M of the anode material. The inventor has found in research that when satisfying $0.020 \leq M = \rho V/(\rho+V) \leq 0.085$, the anode material has the characteristics of high capacity, high initial coulombic efficiency, excellent cycle performance and the like, and can satisfy the application requirements. In the embodiments of the present application, the parameters influencing the capacity, initial coulombic efficiency, cycle performance and other properties of the anode material are all incorporated into the calculation equation for the comprehensive performance measurement parameter M of the anode material, which is controlled within the above range by adjusting and optimizing the related parameters in the equation, so that the anode material has high capacity, high initial coulombic efficiency and excellent cycle performance.

## BRIEF DESCRIPTION OF THE DRAWINGS

FIG. 1 is a process flowchart of an example of a preparation method according to the present application;
FIG. 2 is an XRD pattern of a silicon-based anode material prepared in example 1 of the present application;
FIG. 3 is an initial charge-discharge graph of the silicon-based anode material prepared in example 1 of the present application; and
FIG. 4 is a cycle performance graph of the silicon-based anode material prepared in example 1 of the present application.

## DETAIL DESCRIPTION OF THE INVENTION

To better understand the technical solutions of the present application, the examples of the present application will be described in detail below with reference to the accompanying drawings.

It should be understood that the examples described are merely some, but not all, of the examples of the present application. All other examples obtained by one of ordinary skill in the art based on the examples in the present application without any creative labor belong to the protection scope of the present application.

The terminology used in the examples of the present application is for the purpose of describing particular examples only, and is not intended to limit the present application. As used in the examples of the present application and the appended claims, the singular forms "a", "an", and "the" are intended to include the plural forms as well, unless the context clearly indicates otherwise.

It should be understood that the term "and/or" as used herein is merely to describe an association relationship of associated objects, which may include three relationships. For example, A and/or B may refer to: A alone, A and B, or B alone. In addition, the character "/" as used herein generally indicates that the former and latter associated objects are in an "or" relationship.

In a first aspect, the present application provides an anode material.

In an embodiment of the present application, the anode material includes an active material including a silicon material and a carbon matrix with pores, where at least part of the silicon material is located into the pores of the carbon matrix. The anode material has a true density of $\rho$ g/cm$^3$ and a total pore volume of V cm$^3$/g, and satisfies: $M = \rho V/(\rho+V)$, and $0.020 \leq M \leq 0.085$. Specifically, M may be 0.020, 0030, 0.035, 0.040, 0.045, 0.050, 0.055, 0.070, 0.080, or 0.085.

In an embodiment of the present application, the anode material satisfies: $0.020 \leq M = \rho V/(\rho+V) \leq 0.085$, and with strong structural stability and low volume expansion rate, the anode material has the characteristics of high capacity, high initial coulombic efficiency, excellent cycle performance and the like. In the anode material, the total pore volume V cm$^3$/g refers to the unfilled space in the carbon matrix material. A larger V value indicates larger space reserved in the anode material, resulting in a more obvious buffering effect on expansion of the silicon material, which can help to reduce the volume expansion rate of the anode material. However, an excessively large V value may lead to a decreased capacity of the anode material on one hand, and degraded pressure-resistant properties of the anode material and a decreased lithium-ion transport efficiency on the other hand. The true density $\rho$ g/cm$^3$ is a density obtained by dividing a mass of anode material particles by a volume excluding pores inside and outside the particles, and the true density of the anode material is a standard value independent of the total pore volume V cm$^3$/g. In the silicon-carbon composite anode material of the present application, since the density of silicon is different from that of carbon, it is to be understood that the true density $\rho$ value may be affected by the existing forms of the carbon matrix and the silicon material. A magnitude of the ρ value reflects a filling degree of an interior of the carbon matrix with the silicon material. The more the pores in the carbon matrix are filled with the silicon material, the larger the true density $\rho$ value of the anode material will be, and the more the capacity and pressure-resistant properties of the anode material will be improved. However, the silicon material may be over-matched, or even interference-fitted, with walls of the pores in the carbon matrix where the silicon material is distributed, which is not beneficial to providing a buffer space for the expansion of the silicon material, and may cause an increased volume expansion rate and thereby reduced cycle performance of the anode material. Considering the dual effects of the true density and the total pore volume of the anode material, the present application incorporates both $\rho$ and V into a calculation equation for a comprehensive performance measurement parameter M of the anode material. The inventor has found in research that when satisfying $0.020 \leq M = \rho V/(\rho+V) \leq 0.085$, the anode material has the characteristics of high capacity, high initial coulombic efficiency, excellent cycle performance and the like, and can satisfy the application requirements. In the embodiments of the present application, the parameters influencing the capacity, initial coulombic efficiency, cycle performance and other properties of the anode material are all incorporated into the calculation equation for the comprehensive performance measurement parameter M of the anode material, which is controlled within the above range by adjusting and optimizing the related parameters in the equation, so that the anode material has high capacity, high initial coulombic efficiency and excellent cycle performance.

In some embodiments, $0.001 \leq V \leq 0.1$, and when the V value is within this range, the capacity, initial coulombic efficiency and cycle performance of the anode material can be better improved comprehensively.

In some embodiments, $1.7 \leq \rho \leq 2.3$, and when the $\rho$ value is within this range, the capacity, initial coulombic efficiency and cycle performance of the anode material can be better improved comprehensively.

In some embodiments, based on the mass of the anode material, a mass proportion of silicon in the anode material is 5% to 90%, which may be specifically 5%, 15%, 25%, 35%, 45%, 55%, 65%, 75%, 85%, 90%, or any value therebetween. When the V value is constant, a larger mass proportion of silicon in the anode material will lead to a larger $\rho$ value; and when the mass proportion of silicon in the anode material is in the above range, the $\rho$ value can be favorably adjusted and controlled to a proper range.

In some embodiments, a gap is provided between at least part of the silicon material and walls of the pores in the carbon matrix in which the silicon material is distributed. When a gap is provided between the silicon material and walls of the pores in the carbon matrix in which the silicon material is distributed, the gap can provide a buffer space for the expansion of the silicon material, which can help to reduce the volume expansion rate of the anode material, enhance the structural stability of the anode material, and thereby improve the cycle performance of the anode material.

In some embodiments, the carbon matrix includes at least one of hard carbon, soft carbon, graphite, mesocarbon microbeads, activated carbon, porous carbon, mesoporous carbon, or carbon gel.

In some embodiments, the pores in the carbon matrix have an average pore diameter of 1nm to 10nm, which may be specifically 1nm, 2nm, 4nm, 6nm, 8nm, 10nm, or any value therebetween. The carbon matrix refers to the anode material after the silicon material is removed, and a preparation method for the carbon matrix includes: adding a nitric acid solution with a concentration of 1M into the anode material and soaking for 4h, then adding an HF acid solution with a mass fraction of 20% into the anode material drop by drop, where yellow smoke may be generated, and repeatedly dropping until no yellow smoke is generated any more in the solution; and finally, adding a nitric acid solution with a concentration of 1M to digest the residues, and then cleaning and drying to obtain the anode material without the silicon material. The carbon matrix refers to the anode material after the silicon material is removed, and a preparation method for the carbon matrix may further include: in a stirring state, adding 150mL of the HF acid solution with a mass fraction 20% into 10g of the anode material drop by drop, which will produce $SiF_4$ and $H_2$ and release heat, removing supernatant acid centrifugally when no gas is produced any more, adding 150mL of the HF acid solution with a mass fraction 20% into the anode material again, stirring for 12h before removing supernatant acid centrifugally again, and then washing the anode material with pure water to neutral and drying to obtain the anode material without the silicon material.

In some embodiments, the silicon material includes at least one of crystalline silicon, amorphous silicon, or a composite of crystalline silicon and amorphous silicon. Preferably, the silicon material is amorphous silicon, which has less expansion compared with other types of silicon, and thereby can help to solve the problem of large volume expansion of the silicon-carbon anode material during lithium intercalation and deintercalation. In some embodiments, the silicon material has an average particle size of 0.1nm to 10nm, which may be specifically 0.1nm, 1nm, 2nm, 4nm, 6nm, 8nm, 10nm, or any value therebetween. By controlling a size of the silicon material controlled within a proper range, the volume expansion of the silicon-based anode material can be favorably inhibited.

In some embodiments, the silicon material includes silicon particles. The silicon particles may have a form including at least one of a dot shape, a spherical shape, an ellipsoidal shape, or a flake shape.

In some embodiments, the silicon material includes a mass content of silicon $\geq 99\%$.

In some implementations, the anode material further includes a coating layer at least partially located on a surface of the active material, which can further help to reduce the volume expansion rate of the anode material.

In some embodiments, the coating includes at least one of a carbon material, a conductive polymer, a metal oxide, or a metal sulfide.

In some implementations, the coating layer has a thickness of 1nm to 500nm, which may be specifically 1nm, 10nm, 100nm, 200nm, 300nm, 400nm, 500nm, or any value therebetween. A thickness of the coating layer within the above range can help to improve the cycle performance of the anode material while considering the capacity, rate capability and other electrochemical performance of the anode material.

In some embodiments, the anode material has a specific surface area $\leq 5.0 m^2/g$.

In some implementations, the anode material has a powder conductivity $\geq 0.1 S/cm$.

In a second aspect, the present application further provides a preparation method for an anode material.

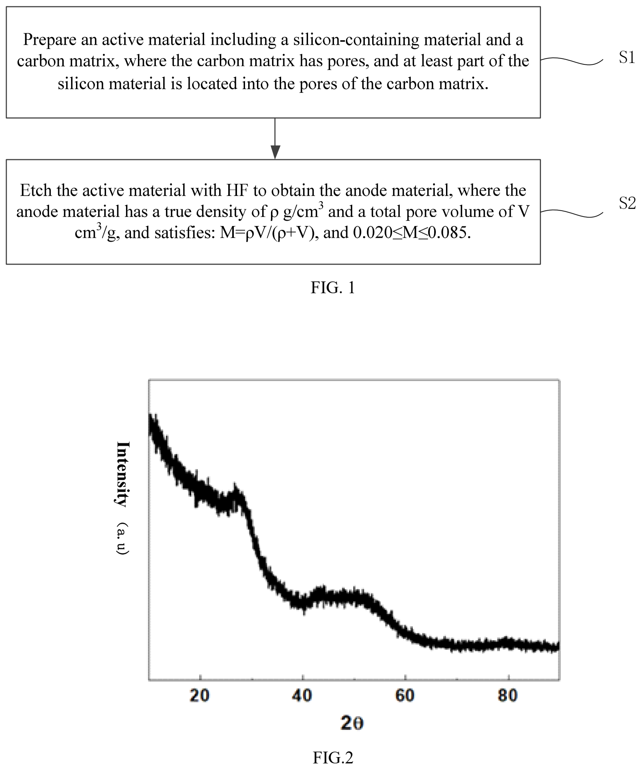

Referring to FIG. 1, in an embodiment of the present application, the preparation method includes the following steps S1 to S2.

At S1, an active material including a silicon-containing material and a carbon matrix is prepared, where the carbon matrix has pores, and at least part of the silicon material is located into the pores of the carbon matrix.

At S2, the active material is etched with HF to obtain the anode material, where the anode material has a true density of $\rho$ g/cm$^3$ and a total pore volume of V cm$^3$/g, and satisfies:

$$M=\rho V/(\rho+V), \text{ and } 0.020 \leq M \leq 0.085.$$

In the preparation method of the embodiment of the present application, the true density $\rho$ g/cm$^3$ and the total pore volume V cm$^3$/g of the anode material are adjusted and controlled so that the prepared anode material satisfies: $0.020 \leq M = \rho V/(\rho+V) \leq 0.085$. With strong structural stability and low volume expansion rate, the resulting anode material has the characteristics of high capacity, high initial coulombic efficiency, excellent cycle performance and the like. The inventor has found in research that when satisfying $0.020 \leq M = \rho V/(\rho+V) \leq 0.085$, the anode material has the characteristics of high capacity, high initial coulombic efficiency, excellent cycle performance and the like. In the preparation process of the anode material of the present application, the p value and V value of the active material are adjusted and controlled to a proper range by etching so that the M value of the prepared anode material is within the above range. In the etching process, HF etches the silicon material in the pores in the carbon matrix so that the gap between the silicon material and the walls of the pores in the carbon matrix where the silicon material is distributed is increased, that is, a larger buffer space is provided for expansion of the silicon material, thereby reducing the volume expansion rate of the anode material and further improving the cycle performance of the anode material.

The following is a detailed description of the preparation method provided in the embodiments of the present application:

At S1, an active material including a silicon-containing material and a carbon matrix is prepared, where the carbon matrix has pores, and at least part of the silicon material is located into the pores of the carbon matrix.

In some embodiments, the preparation step of the active material includes placing the carbon matrix in a first atmospheric environment containing a silicon source gas for first heat treatment to obtain the active material.

In a specific embodiment, the silicon source gas includes at least one of silane or halosilane, for example: $SiH_4$, $Si_2H_6$, $SiF_4$ or the like, which may be selected by one skilled in the art according to the actual situation.

In a specific embodiment, an introduction flow rate of the silicon source gas is 0.1L/min to 500L/min, which may be specifically 0.1L/min, 1L/min, 100L/min, 200L/min, 300L/min, 400L/min, 500L/min, or any value therebetween. When the flow rate of the silicon source gas is limited within the above range, the true density and total pore volume of the prepared active material can be favorably adjusted and controlled into a proper range, which can further help to adjust and control the p value and the V value of the anode material to a proper range.

In a specific embodiment, the silicon source gas in the first atmospheric environment has a volume concentration of 1% to 100%, which may be specifically 1%, 5%, 10%, 20%, 30%, 50%, 60%, 70%, 80%, 90%, 100%, or any value therebetween. By adjusting the volume concentration of the silicon source gas, the content of the deposited silicon in the carbon matrix, and thus the total pore volume, can be adjusted. If the concentration of the silicon source gas is too low, less silicon will be deposited in the carbon matrix and the total pore volume will be increased. Although more expansion space is reserved for the silicon-based anode material so that the expansion rate of the anode material is reduced and the cycle performance is enhanced, the capacity of the prepared silicon-based anode material will be obviously reduced.

In a specific embodiment, the first heat treatment is performed for 100min to 1000min, which may be specifically 100min, 200min, 400min, 600min, 800min, 1000min, or any value therebetween. By controlling the time of the first heat treatment within the above range, the true density and total pore volume of the prepared active material can be favorably adjusted and controlled into a proper range, which can further help to adjust and control the p value and the V value of the anode material to a proper range.

In a specific embodiment, the first heat treatment is performed at a heating rate of 1°C/min to 20°C/min, which may be specifically 1°C/min, 2°C/min, 4°C/min, 8°C/min, 12°C/min, 16°C/min, 20°C/min, or any value therebetween. By controlling the heating rate of the first heat treatment within the above range, the true density and total pore volume of the prepared active material can be favorably adjusted and controlled into a proper range, which can further help to adjust and control the $\rho$ value and the V value of the anode material within a proper range.

In a specific embodiment, the first heat treatment includes any one of sintering, chemical vapor deposition, or chemical vapor infiltration. In other words, in the present application, the silicon material obtained by decomposing the silicon source gas may be deposited on the carbon material by a sintering process, or by a chemical vapor deposition or a chemical infiltration process.

In a specific embodiment, the first atmospheric environment further includes a protective gas including at least one of nitrogen, hydrogen, argon or helium. The first heat treatment is performed in a protective gas environment so that the purity and thus the electrochemical performance of the anode material can be improved.

In a specific embodiment, the carbon matrix has a total pore volume of $0.1 \text{ cm}^3/\text{g}$ to $1.8 \text{ cm}^3/\text{g}$, which may be specifically $0.1 \text{ cm}^3/\text{g}$, $0.5 \text{ cm}^3/\text{g}$, $1 \text{ cm}^3/\text{g}$, $1.5 \text{ cm}^3/\text{g}$, $1.8 \text{ cm}^3/\text{g}$, or any value therebetween. When the total pore volume of the carbon matrix is within the above range, the content of the silicon material in the anode material can be favorably adjusted and controlled to a proper range, which can further facilitate comprehensive improvement of the capacity and cycle performance of the anode material.

In a specific embodiment, the carbon matrix has an average pore diameter of 1nm to 10nm, which may be specifically 1nm, 2nm, 4nm, 6nm, 8nm, 10nm, or any value therebetween. When the average pore diameter of the carbon matrix is within the above range, uniform dispersion of the silicon material in the pores in the carbon matrix can be facilitated, and the expansion buffer space is favorably reserved between more silicon material and walls of the pores in the carbon matrix in which the silicon material is distributed.

At S2, the active material is etched with HF to obtain the anode material.

In some embodiments, the etching specifically includes: performing second heat treatment on the active material in a second atmospheric environment containing HF to obtain the anode material.

In a specific embodiment, a volume concentration of hydrofluoric acid in the second atmospheric environment is 0.01% to 50%, which may be specifically 0.01%, 1%, 10%, 20%, 30%, 40%, 50%, or any value therebetween. When the volume concentration of hydrofluoric acid is controlled within the above range, the etching rate can be favorably controlled in a proper range, which can further help to adjust and control the p value and the V value of the anode material to a proper range.

In a specific embodiment, the second heat treatment is performed for 1min to 800min, which may be specifically 1min, 10min, 100min, 200min, 300min, 400min, 500min, 600min, 700min, 800min, or any value therebetween. Preferably, the second heat treatment is performed for 10min to 80min, and by controlling the time of the second heat treatment within the above range, the p value and V value of the anode material can be favorably adjusted and controlled to a proper range.

In a specific embodiment, the second heat treatment is performed at 200°C to 800°C, which may be specifically 200°C, 300°C, 400°C, 500°C, 600°C, 700°C, 800°C, or any value therebetween. By controlling the temperature of the second heat treatment within the above range, the etching rate can be favorably controlled in a proper range, which can further help to adjust and control the p value and the V value of the anode material to a proper range.

In some embodiments, before the etching, the method further includes coating the active material.

In a specific embodiment, a coating material used in the coating incudes at least one of a carbon material, a conductive polymer, a metal oxide, or a metal sulfide.

In a specific embodiment, the coating is carbon coating, including at least one of solid-phase carbon coating, liquid-phase carbon coating, or gas-phase carbon coating.

In a specific embodiment, a solid-phase carbon source used in the solid-phase carbon coating includes at least one of sucrose, fructose, glucose, pitch, phenolic resin, polyimide, citric acid, epoxy resin, amino resin, polystyrene, polyacrylic acid, carboxymethyl cellulose, or cellulose acetate butyrate.

In a specific embodiment, a gas-phase carbon source used in the gas-phase carbon coating includes at least one of acetylene, methane, propylene, benzene, ethanol, methanol, ethylene, propane, or butane.

In a specific embodiment, the coating is performed at 200°C to 800°C, which may be specifically 200°C, 300°C, 400°C, 500°C, 600°C, 700°C, 800°C, or any value therebetween.

In a specific embodiment, the coating is performed for 1min to 800min, which may be specifically 1min, 100min, 200min, 300min, 400min, 500min, 600min, 700min, 800min, or any value therebetween.

In some embodiments, preparation of the carbon matrix includes: performing activation treatment on a mixture of an activator and a carbon-based raw material to obtain the carbon matrix.

In a specific embodiment, the carbon-based raw material includes at least one of coconut shell, shell carbon, straw carbon, resin carbon, pitch carbon, bamboo charcoal, rice hull, or sugar.

In a specific embodiment, the activator includes at least one of water vapor, an alkaline substance, or a templating agent.

In a specific embodiment, the alkaline substance includes at least one of potassium hydroxide or sodium hydroxide.

In a specific embodiment, the templating agent includes at least one of calcium hydroxide, calcium oxide, magnesium oxide, magnesium hydroxide, melamine, or aluminum oxide.

In a specific embodiment, the activation treatment is a water vapor activation treatment, and a volume concentration of the water vapor used is 0.01% to 80%, which may be specifically 0.01%, 0.1%, 1%, 10%, 20%, 40%, 60%, 80%, or any value therebetween.

In a specific embodiment, the activation treatment is performed at 500°C to 2000°C, which may be specifically 500°C, 1000°C, 1500°C, 2000°C, or any value therebetween.

In a specific embodiment, the activation treatment is performed at a heating rate of 1°C /min to 20°C/min, which may be specifically 1°C/min, 5°C/min, 10°C/min, 15°C/min, 20°C/min, or any value therebetween.

In a specific embodiment, the activation treatment is performed for 2h to 20h, which may be specifically 2h, 4h, 8h, 12h, 16h, 20h, or any value therebetween.

In some embodiments, before the activation treatment, preparation of the carbon matrix further includes: performing carbonization treatment on the carbon-based raw material.

In a specific embodiment, the carbonization treatment is performed at 400°C to 1200°C, which may be specifically 400°C, 600°C, 800°C, 1000°C, 1200°C, or any value therebetween.

In a specific embodiment, the carbonization treatment is performed for 2h to 20h, which may be specifically 2h, 4h, 8h, 12h, 16h, 20h, or any value therebetween.

In some embodiments, after the activation treatment, preparation of the carbon matrix further includes: performing purification treatment on the activated material.

In a specific embodiment, the purification treatment includes washing and drying the activated material.

In a specific embodiment, preparation of the carbon matrix further includes: pulverizing and screening the activated material. Preferably, the activated material is subjected to the purification treatment before the pulverizing and screening.

In a third aspect, the present application further provides a lithium-ion battery, including the anode material as described above, or including an anode material prepared by the above preparation method.

Those skilled in the art will appreciate that the above described preparation methods of the anode material and the battery are only examples. Other methods commonly used in the art may be employed without departing from the disclosure of the present application.

The examples of the present application are further illustrated below in the context of several examples. The examples of the present application are not limited to the following specific examples. The present application may be modified and implemented as appropriate within the scope of the claims.

## Example 1

(1) Bamboo charcoal is taken as a raw material and subjected to carbonization treatment at 600°C, and then pickled with hydrochloric acid at a concentration of 10mol/L for 5h. The pickled product is then dried and subjected to water vapor activation treatment by introducing a mixed gas of water vapor and nitrogen, where the volume concentration of the water vapor is 3.5%, and the activation is performed for 13h at 900°C to obtain a porous carbon material (i.e., the carbon matrix, with an average pore diameter of 1.8nm).

(2) The porous carbon material is placed into a chemical vapor deposition (CVD) device into which silane ($SiH_4$) is introduced, with a volume concentration of silane controlled to be 25%, and heated to 490°C and reacted for 8h to obtain an active material.

(3) The active material is placed into a reaction furnace into which methane is introduced, with a volume concentration of methane controlled to be 12%, and subjected to heat treatment at 720°C while keeping the temperature for 2h to obtain a coated product.

(4) A mixed gas of HF and argon is introduced into the reaction furnace to etch the coating product, where a volume concentration of HF is 0.5%, and the etching is performed at 400°C for 40min. Then the mixture is cooled, and the obtained etched product is screened and graded to obtain the anode material.

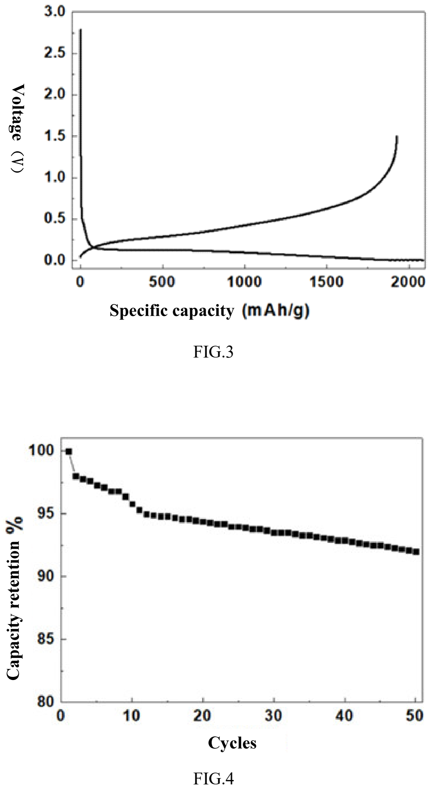

The silicon-based anode material of example 1 was analyzed with reference to FIGs. 2 to 3. As can be seen from FIG. 2, the anode material includes amorphous silicon. As can be seen from FIG. 3, the anode material has a relatively high initial coulombic efficiency, with an initial charge-discharge capacity of 1935mAh/g, and an initial coulombic efficiency of 92.8%. As can be seen from FIG. 4, the anode material has excellent cycle performance, with a capacity retention after 50 cycles being 92.4%.

## Example 2

(1) Nut shell is taken as a raw material and subjected to carbonization treatment at 800°C , and then pickled with hydrochloric acid at a concentration of 5mol/L for 58h. The pickled product is then dried and subjected to water vapor activation treatment by introducing a mixed gas of water vapor and nitrogen, where the volume concentration of the water vapor is 2.5%, and the activation is performed for 13h at 900°C to obtain a porous carbon material (i.e., the carbon matrix, with an average pore diameter of 1.9nm).

(2) The porous carbon material is placed into a chemical vapor deposition (CVD) device into which silane (SiH$_4$) is introduced, with a volume concentration of silane controlled to be 15%, and heated to 500°C and reacted for 7h to obtain an active material.

(3) The active material is placed into a reaction furnace into which acetylene is introduced, with a volume concentration of acetylene controlled to be 18%, and subjected to heat treatment at 680°C while keeping the temperature for 2h to obtain a coated product.

(4) A mixed gas of HF and argon is introduced into the reaction furnace to etch the coating product, where a volume concentration of HF is 0.1%, and the etching is performed at 500°C for 30min. Then the mixture is cooled, and the obtained etched product is screened and graded to obtain the anode material.

**Example 3**

(1) Coconut shell is taken as a raw material and subjected to carbonization treatment at 900°C, and then pickled with hydrochloric acid at a concentration of 12mol/L for 5h. The pickled product is then dried and subjected to water vapor activation treatment by introducing a mixed gas of water vapor and nitrogen, where the volume concentration of the water vapor is 4.8%, and the activation is performed for 12h at 800°C to obtain a porous carbon material (i.e., the carbon matrix, with an average pore diameter of 1.7nm).

(2) The porous carbon material is placed into a chemical vapor deposition (CVD) device into which silane (SiH$_4$) is introduced, with a volume concentration of silane controlled to be 35%, and heated to 450°C and reacted for 6h to obtain an active material.

(3) The active material is placed into a reaction furnace into which propane is introduced, with a volume concentration of propane controlled to be 12%, and subjected to heat treatment at 670°C while keeping the temperature for 3h to obtain a coated product.

(4) A mixed gas of HF and argon is introduced into the reaction furnace to etch the coating product, where a volume concentration of HF is 1.1%, and the etching is performed at 500°C for 40min. Then the mixture is cooled, and the obtained etched product is screened and graded to obtain the anode material.

**Example 4**

(1) Rice hull is taken as a raw material and subjected to carbonization treatment at 950°C , and then pickled with hydrochloric acid at a concentration of 5.9 mol/L for 4h. The product is then dried and subjected to water vapor activation treatment by introducing a mixed gas of water vapor and nitrogen, where the volume concentration of the water vapor is 1.8%, and the activation is performed for 15h at 850°C to obtain a porous carbon material (i.e., the carbon matrix, with an average pore diameter of 2.2nm).

(2) The porous carbon material is placed into a chemical vapor deposition (CVD) device into which silane is introduced, with a volume concentration of silane controlled to be 55%, and heated to 550°C and reacted for 4h to obtain an active material.

(3) The active material is placed into a reaction furnace into which methane is introduced, with a volume concentration of methane controlled to be 22%, and subjected to heat treatment at 670°C while keeping the temperature for 2h to obtain a coated product.

(4) A mixed gas of HF and argon is introduced into the reaction furnace to etch the coating product, where a volume concentration of HF is 1.5%, and the etching is performed at 450°C for 60min. Then the mixture is cooled, and the obtained etched product is screened and graded to obtain the anode material.

**Example 5**

(1) Commercial porous carbon (with an average pore diameter of 1.6nm) is placed into a CVD device into which silane is introduced, with a volume concentration of silane controlled to be 60%, and heated to 520°C and reacted for 4h to obtain an active material.

(3) The active material is placed into a reaction furnace into which ethylene is introduced, with a volume concentration of ethylene controlled to be 26%, and subjected to heat treatment at 690°C while keeping the temperature for 2h to obtain a coated product.

(4) A mixed gas of HF and argon is introduced into the reaction furnace, where a volume concentration of HF is 0.92%, and the etching is performed at 600°C for 10min. Then the mixture is cooled, and the obtained etched product is screened and graded to obtain the anode material.

**Example 6**

This example differs from example 1 in that: in step (2): the volume concentration of the silane is controlled to be 5%, and the deposition time is 15h.

**Example 7:** This example differs from example 1 in that: in step (4): the volume concentration of HF is 50%.

**Example 8:** This example differs from example 1 in that: in step (2): the volume concentration of the silane is controlled to be 65%, and the deposition time is 3h.

**Example 9:** This example differs from example 1 in that: in step (2): the volume concentration of the silane is controlled to be 35%, and the deposition time is 6h.

**Comparative example 1**

This comparative example differs from example 1 in that: step (4) is omitted.

**Comparative example 2**

This comparative example differs from example 1 in that: the etching time in step (4) is 800min.

**Comparative example 3**

This comparative example differs from example 1 in that: in step (1), the volume concentration of water vapor is 95%.

**Comparative example 4**

This comparative example differs from example 1 in that: in step (2), the volume concentration of silane is 0.65%.

**Comparative example 5**

This comparative example differs from example 1 in that: in step (4), the volume concentration of HF is 0.005%.

**The test method includes the following steps:**

1. Test of particle size:

The particle size is measured with a Mastersizer 3000 laser diffraction technique. Measurement of the particle size is completed by measuring an intensity of scattered light as the laser beam passes through the dispersed particle samples. The data is then used to analyze and calculate the particle size distribution that forms the scattering spectrum. D50: a particle size at which the cumulative particle size distribution percentage of a sample reaches 50%. Its physical meaning is that 50% of the particles have a particle size smaller than D50, and 50% of the particles have a particle size greater than D50. Therefore, D50 is also referred to as median particle size. D90, D50 and D10 are equivalent diameters of the largest particles in the cumulative distribution curves at 90%, 50%, and 10%, respectively.

2. Average particle size:

A field emission scanning electron microscope or transmission electron microscope is used to observe nano silicon particles, a proportional scale is used to directly measure particle sizes of 5 to 10 nano silicon particles, and an average particle size is taken as the final nano silicon particle size.

3. Test of mass content of silicon in the anode material:

The sample is burned in an oxygen atmosphere in a box-type atmosphere furnace (model: SA2-9-17TP) so that the silicon and silicon monoxide in the samples are reacted to form silicon dioxide, and the carbon is burned to form carbon dioxide which is discharged, and the mass content of silicon in the anode material is weighed and calculated.

4. Test of mass content of carbon in the anode material: The sample is burned in a high temperature and rich oxygen state with a German Bruker/Eltra infrared carbon and sulfur analyzer G4 ICARUS HF/CS-i, the carbon element therein is oxidized to carbon dioxide and enters the infrared detector with the carrier gas, and the carbon content is calculated through quantitative statistics of changes in the infrared absorption wavelength intensity of the carbon dioxide signal.

5. Test method for carbon matrix pore size and pore volume proportion:

The pore volume of the sample is a total volume of pores per unit mass of the sample, which can be measured through gas adsorption measurement. Nitrogen adsorption is a technique for characterizing the porosity and pore size distribution of a material by condensing a gas into pores of a solid. As the pressure rises, the gas is firstly condensed into pores with the smallest diameter, and as the pressure further rises to a saturation point, all pores are filled with liquid. Then the nitrogen pressure is gradually reduced to allow the liquid to be evaporated from the system. Analysis of the adsorption and desorption isotherms allows determination of the pore volume and pore size distribution, as well as the respective proportions of the pore volumes of micropores, mesopores, and macropores in the total pore volume.

6. Specific surface area: A specific surface area is measured with a Micromeritics TriStar3000 specific surface area and pore size analyzer.

7. Tap density: Using a Bettersize tap density tester, a certain amount of sample is weighed and vibrated for 3000 times at 300 times/min to test the tap density.

8. Thickness of coating layer: An FIB-SEM device is used for section processing of the material to obtain an average thickness of the coating layer through measurement in the SEM.

9. Powder conductivity: A volume resistivity of the anode material powder is measured by a four-probe method using an MCP-PD51 powder resistance test system from Mitsubishi Chemical, Japan. Resistances of the powder under five pressure points, i.e., 4KN, 8KN, 12KN, 16KN and 20KN, are respectively tested by the instrument, and then the conductivity and resistivity of the anode material powder are automatically calculated by a computer.

10. Characterization of amorphous silicon in the anode material: An X-ray diffractometer (XRD) is used to measure a diffraction peak to confirm the type of silicon, and the characteristic peak appears at $2\theta=28.4°$ is a characteristic peak of the amorphous silicon.

11. Test of true density ($\rho$ g/cm$^3$): The true density of the material is tested according to the test method in appendix D of GBT 24533-2019.

12. Test of pore volume (V cm$^3$/g): The pore volume of the anode material is tested according to GB/T7702.20-2008.

13. Test of electrochemical cycle performance: The silicon-based anode materials prepared in the examples and comparative examples are respectively mixed with a conductive agent and a binder at a mass ratio of 94:1:5 by dissolving in a solvent, where the solid content is controlled to be 50%. Then the mixture is coated onto a copper foil current collector, and dried in vacuum to obtain an anode sheet. Then, a ternary cathode sheet prepared by a conventional mature process, 1 mol/L of LiPF6/EC + DMC + EMC (v/v =1:1:1) electrolyte, a Celgard2400 separator, and a shell are assembled into an 18650 cylindrical battery cell by a conventional production process. The charging and discharge test of the cylindrical battery is performed on a LAND battery test system from Wuhan Jinnuo electronics under room temperature conditions at a constant current of 0.2C with a charge/discharge voltage limited to 2.75V to 4.2V.

**The testing results of examples 1 to 9 and comparative examples 1 to 5 are shown in the following table.**

Table 1

| Sample | M | $\rho$ | V | Initial reversible capacity (mAh/g) | ICE (%) | Expansion rate after 50 cycles (%) | Capacity retention after 50 cycles (%) |
|---|---|---|---|---|---|---|---|
| Example 1 | 0.038 | 2.01 | 0.039 | 1935 | 92.8 | 33.2 | 92.4 |
| Example 2 | 0.032 | 2.05 | 0.032 | 1952 | 92.7 | 34.9 | 92.1 |
| Example 3 | 0.053 | 1.96 | 0.055 | 1922 | 92.0 | 32.8 | 91.9 |
| Example 4 | 0.065 | 1.90 | 0.067 | 1967 | 91.8 | 31.2 | 92.0 |
| Example 5 | 0.036 | 2.02 | 0.037 | 1897 | 92.0 | 31.2 | 92.0 |
| Example 6 | 0.045 | 1.96 | 0.046 | 1835 | 92.4 | 32.9 | 92.5 |
| Example 7 | 0.056 | 1.90 | 0.058 | 1911 | 92.1 | 35.0 | 91.8 |

(continued)

| Sample | M | ρ | V | Initial reversible capacity (mAh/g) | ICE (%) | Expansion rate after 50 cycles (%) | Capacity retention after 50 cycles (%) |
|---|---|---|---|---|---|---|---|
| Example 8 | 0.024 | 1.76 | 0.025 | 1912 | 92.8 | 32.0 | 92.5 |
| Example 9 | 0.081 | 2.06 | 0.085 | 1709 | 92.1 | 32.0 | 92.4 |
| Comparative example 1 | 0.017 | 2.1 | 0.017 | 1969 | 92.2 | 38.7 | 91.2 |
| Comparative example 2 | 0.101 | 1.85 | 0.107 | 1687 | 87.2 | 32.0 | 85.1 |
| Comparative example 3 | 0.013 | 2.15 | 0.013 | 1945 | 92.9 | 43.4 | 87.5 |
| Comparative example 4 | 0.129 | 1.78 | 0.14 | 1235 | 78.9 | 30.1 | 92.94 |
| Comparative example 5 | 0.018 | 2.09 | 0.018 | 1954 | 92.9 | 38.9 | 90.3 |

Referring to FIGs. 2 to 4 and analyzing table 1: comparing the examples 1 to 9 with the comparative examples 1 to 5, it can be seen that when the M value of the prepared anode material is within the range of 0.020 to 0.085, the anode material has a relatively low expansion rate, while having relatively excellent cycle performance and high initial coulombic efficiency. When the value of M is too small, the anode material has a relatively high expansion rate, and applications of the anode material is greatly limited. When the value of M is too large, the capacity and initial coulombic efficiency of the anode material are both reduced.

Comparing comparative example 1 with example 1, it can be concluded that: the silicon material in the pores in the carbon matrix is not etched with HF in comparative example 1, so that the M value of the anode material prepared in comparative example 1 is too small to satisfy the range $0.020 \leq M \leq 0.085$. Therefore, the anode material of comparative example 1 has worse volume expansion rate and cycle performance to the anode material of example 1.

Comparing comparative example 2 with example 1, it can be concluded that: the etching in step (4) is performed for an excessively long time in comparative example 2, and which may cause excessive etching of the silicon material in the anode material; and the M value of the anode material prepared in comparative example 2 is too large to satisfy the range $0.020 \leq M \leq 0.085$, and therefore, the anode material prepared in comparative example 2 has a significantly reduced capacity relative to the anode material prepared in example 1.

Comparing comparative example 3 with example 1, in step (1) of comparative example 3, the water vapor has a too high volume concentration, and the activated pores (the average pore size) in the carbon matrix are enlarged (the average pore sizes of the carbon matrixes in example 1 and comparative example 3 are 1.9nm and 4.5nm, respectively, as measured according to the test method described above), so that the M value of the anode material prepared in comparative example 3 is too small to satisfy the range $0.020 \leq M \leq 0.085$. Therefore, the anode material prepared in comparative example 3 has worse expansion and cycle performance relative to the anode material prepared in example 1.

Comparing comparative example 4 with example 1, the volume concentration of silane in step (2) of comparative example 4 is decreased while the time is unchanged, resulting in less silicon deposited in the carbon matrix and an increased total pore volume. The M value of the anode material prepared in comparative example 4 is too large to satisfy the range $0.020 \leq M \leq 0.085$, and therefore, the anode material prepared in comparative example 4 has a significantly reduced capacity relative to the anode material prepared in example 1.

Comparing comparative example 5 with example 1, the volume concentration of HF in step (4) of comparative example 5 is too low, resulting in a relatively low etching rate of the silicon material in the anode material and a pore-forming effect by etching that is not obvious. The M value of the anode material prepared in comparative example 5 is too small to satisfy the range $0.020 \leq M \leq 0.085$. Therefore, the anode material prepared in comparative example 5 has an increased volume expansion rate and degraded cycle performance relative to the anode material prepared in example 1.

The above are merely preferred embodiments of the present disclosure and not intended to limit the present disclosure. Any modification, equivalent replacement, improvement or the like made within the spirit and principle of the present disclosure shall be included in the protection scope of the present disclosure.

Claims

1. An anode material, **characterized in** comprising an active material including a silicon material and a carbon matrix with pores, wherein at least part of the silicon material is located into the pores of the carbon matrix;
the anode material has a true density of ρ g/cm$^3$ and a total pore volume of V cm$^3$/g, and satisfies:

EP 4 723 219 A1

$$M=\rho V/(\rho+V), \text{ and } 0.020 \leq M \leq 0.085.$$

2. The anode material of claim 1, **characterized in that** the silicon material includes silicon particles.

3. The anode material of any one of claims 1 to 2, **characterized in that** $0.001 \leq V \leq 0.1$.

4. The anode material of any one of claims 1 to 3, **characterized in that** $1.7 \leq \rho \leq 2.3$.

5. The anode material of any one of claims 1 to 4, **characterized in that** based on a mass of the anode material, a mass proportion of silicon in the anode material is 5% to 90%.

6. The anode material of any one of claims 1 to 5, **characterized in that** a gap is provided between at least part of the silicon material and walls of the pores in the carbon matrix in which the silicon material is distributed.

7. The anode material of any one of claims 1 to 6, **characterized in that** the carbon matrix includes at least one of hard carbon, soft carbon, graphite, mesocarbon microbeads, activated carbon, porous carbon, mesoporous carbon, or carbon gel.

8. The anode material of any one of claims 1 to 7, **characterized in that** the pores in the carbon matrix have an average pore diameter of 1nm to 10nm.

9. The anode material of any one of claims 1 to 8, **characterized in that** the silicon material includes at least one of crystalline silicon, amorphous silicon, or a composite of crystalline silicon and amorphous silicon.

10. The anode material of any one of claims 1 to 9, **characterized in that** the silicon material has an average particle size of 0.1nm to 10nm.

11. The anode material of any one of claims 1 to 10, **characterized in that** the silicon material includes a mass content of silicon $\geq 99\%$.

12. The anode material of any of claims 1 to 11, **characterized by** at least one of the following features:

    (1) the anode material includes a coating layer at least partially located on a surface of the active material;
    (2) the anode material includes a coating layer including at least one of a carbon material, a conductive polymer, a metal oxide, or a metal sulfide;
    (3) the anode material includes a coating layer having a thickness of 1nm to 500nm.

13. The anode material of any one of claims 1 to 12, **characterized in that** the anode material has a specific surface area $\leq 5.0 m^2/g$.

14. The anode material of any one of claims 1 to 13, **characterized in that** the anode material has a powder conductivity $\geq 0.1 S/cm$.

15. A battery, **characterized in** comprising the anode material of any one of claims 1 to 14.

Prepare an active material including a silicon-containing material and a carbon matrix, where the carbon matrix has pores, and at least part of the silicon material is located into the pores of the carbon matrix.

S1

Etch the active material with HF to obtain the anode material, where the anode material has a true density of $\rho$ g/cm$^3$ and a total pore volume of V cm$^3$/g, and satisfies: $M=\rho V/(\rho+V)$, and $0.020 \leq M \leq 0.085$.

S2

FIG. 1

FIG.2

FIG.3

FIG.4

## INTERNATIONAL SEARCH REPORT

| International application No. |
| --- |
| **PCT/CN2025/070813** |

**A. CLASSIFICATION OF SUBJECT MATTER**

H01M 4/38(2006.01)i; H01M4/36(2006.01)i; H01M4/62(2006.01)i; H01M4/04(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, ISI Web of Science, 中国期刊网全文数据库, China Journal Network Full-text Database (CJFD): 贝特瑞新材料, 肖称茂, 何鹏, 任建国, 负极, 负电极, 阳极, 电极, 多孔, 硅, 真密度, 总孔体积, 包覆, 包裹, 涂覆, 包埋, 核壳, 真密度, 密度, 孔体积, 孔径, 粒径, 聚合物, 金属氧化物, 金属硫化物, 比表面积, 电导率, coat+, core+, ayer?, shell +, Cathode, carbon, active material, silicon, pore?,

**C. DOCUMENTS CONSIDERED TO BE RELEVANT**

| Category* | Citation of document, with indication, where appropriate, of the relevant passages | Relevant to claim No. |
| --- | --- | --- |
| Y | CN 117790701 A (BTR NEW MATERIAL GROUP CO., LTD. et al.) 29 March 2024 (2024-03-29)<br>description, paragraphs 0079-0171 | 1-15 |
| Y | CN 117525378 A (BTR NEW MATERIALS GROUP CO., LTD.) 06 February 2024 (2024-02-06)<br>description, paragraphs 0077-0173 | 1-15 |
| PX | CN 118016866 A (BTR NEW MATERIALS GROUP CO., LTD.) 10 May 2024 (2024-05-10)<br>description, paragraphs 0004-0009 and 0015-0016 | 1-15 |
| Y | CN 117317205 A (BTR NEW MATERIALS GROUP CO., LTD.) 29 December 2023 (2023-12-29)<br>description, paragraphs 0005-0082 | 1-15 |
| Y | WO 2022205143 A1 (NINGDE AMPEREX TECHNOLOGY LTD.) 06 October 2022 (2022-10-06)<br>description, paragraphs 0005-0033 | 1-15 |

☑ Further documents are listed in the continuation of Box C.  ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 April 2025** | **08 April 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2025/070813** |

### C. DOCUMENTS CONSIDERED TO BE RELEVANT

| Category* | Citation of document, with indication, where appropriate, of the relevant passages | Relevant to claim No. |
| --- | --- | --- |
| Y | WO 2023207996 A1 (FARASIS ENERGY GANZHOU CO., LTD. et al.) 02 November 2023 (2023-11-02) <br> description, paragraphs 0007-0055 | 1-15 |
| A | CN 111902210 A (RESEARCH FOUNDATION OF THE STATE UNIVERSITY OF NEW YORK) 06 November 2020 (2020-11-06) <br> entire document | 1-15 |
| A | CN 117832464 A (BTR NEW MATERIALS GROUP CO., LTD.) 05 April 2024 (2024-04-05) <br> entire document | 1-15 |
| A | WO 2022193123 A1 (NINGDE AMPEREX TECHNOLOGY LTD.) 22 September 2022 (2022-09-22) <br> entire document | 1-15 |

Form PCT/ISA/210 (second sheet) (July 2022)

**INTERNATIONAL SEARCH REPORT**
Information on patent family members

International application No.

**PCT/CN2025/070813**

| Patent document cited in search report | | | Publication date (day/month/year) | Patent family member(s) | | | Publication date (day/month/year) |
|---|---|---|---|---|---|---|---|
| CN | 117790701 | A | 29 March 2024 | WO | 2024061099 | A1 | 28 March 2024 |
| | | | | KR | 20240163123 | A | 18 November 2024 |
| | | | | US | 2025038184 | A1 | 30 January 2025 |
| CN | 117525378 | A | 06 February 2024 | None | | | |
| CN | 118016866 | A | 10 May 2024 | None | | | |
| CN | 117317205 | A | 29 December 2023 | None | | | |
| WO | 2022205143 | A1 | 06 October 2022 | CN | 114144909 | A | 04 March 2022 |
| WO | 2023207996 | A1 | 02 November 2023 | CN | 114695865 | A | 01 July 2022 |
| CN | 111902210 | A | 06 November 2020 | EP | 3752287 | A1 | 23 December 2020 |
| | | | | EP | 3752287 | A4 | 01 December 2021 |
| | | | | MX | 2020008494 | A | 15 January 2021 |
| | | | | JP | 2024096796 | A | 17 July 2024 |
| | | | | WO | 2019161288 | A1 | 22 August 2019 |
| | | | | JP | 2021514917 | A | 17 June 2021 |
| | | | | JP | 7470043 | B2 | 17 April 2024 |
| | | | | US | 2021114886 | A1 | 22 April 2021 |
| | | | | KR | 20200128403 | A | 12 November 2020 |
| CN | 117832464 | A | 05 April 2024 | None | | | |
| WO | 2022193123 | A1 | 22 September 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410424313